# EUROPÄISCHE PATENTSCHRIFT

(11) **EP 1 649 206 B1**
(45) Veröffentlichungstag und Bekanntmachung des Hinweises auf die Patenterteilung: **03.11.2010**
(21) Anmeldenummer: 03818379.4
(22) Anmeldetag: 29.07.2003
(51) Int. Cl.: F16N 7/32

(54) **VORRICHTUNG ZUM AUFTEILEN EINES IN EINER GASSTRÖMUNG TRANSPORTIERTEN VISKOSEN MEDIUMS, INSBESONDERE EINES SCHMIERMITTELS WIE ÖL**
DEVICE FOR SHARING OUT A VISCOUS MEDIUM, ESPECIALLY A LUBRICANT SUCH AS OIL, TRANSPORTED IN A GAS FLOW
DISPOSITIF POUR REPARTIR UN MILIEU VISQUEUX TRANSPORTE DANS UN FLUX GAZEUX, NOTAMMENT UN AGENT LUBRIFIANT TEL QUE DE L'HUILE

(43) Veröffentlichungstag der Anmeldung: 26.04.2006
(73) Patentinhaber: Delimon GmbH, 40227 Düsseldorf (DE)
(72) Erfinder: CLAUSS, Peter, 40597 Düsseldorf (DE); BEMBA, Siegfried, 41569 Rommerskirchen (DE); NIEDERHEITMANN, Achim, 58313 Herdecke-Westende (DE)
(74) Vertreter: Stenger, Watzke & Ring
(86) Internationale Anmeldenummer: PCT/EP2003/008610
(87) Internationale Veröffentlichungsnummer: WO 2005/022025

(56) Entgegenhaltungen:
- EP-A- 0 010 269
- EP-A- 0 902 868
- US-A- 3 941 210
- US-A- 5 253 733
- US-A- 5 921 349

## Beschreibung

Die vorliegende Erfindung betrifft eine Vorrichtung zum Aufteilen eines in einer Gasströmung transportierten viskosen Mediums, insbesondere eines Schmiermittels wie Öl, mit einem Gehäuse mit einem an einer Stirnseite des Gehäuses vorhandenen Zuströmanschluss und mit wenigstens zwei an der gegenüberliegenden Stirnseite des Gehäuses vorhandenen Abströmanschlüssen.

Bei dem Transport eines viskosen Mediums in einer Gasströmung wird einem durch eine Rohrleitung strömendem Gasstrom, in der Regel Luft, ein viskoses Medium, in der Regel ein den jeweiligen Anforderungen genügendes Öl als Schmiermittel, intermittierend zugegeben. Das viskose Medium bildet dabei einen dünnen, eine gleichmäßige Wellenstruktur aufweisenden Film auf der Innenwand der Rohrleitung aus. Dabei wird der Film aufgrund der Reibung zwischen den aneinander anliegenden Grenzschichten von Gasstrom und viskosem Medium sowie dem Auftreffen der Gasströmung auf die Wellenberge des Films an der Innenwand der Rohrleitung wendelförmig und schlierenartig auseinander gezogen und in Strömungsrichtung vorwärtsgetrieben, ohne dass es zu einer Vermischung des Gasstroms mit dem viskosen Medium kommt. Ein derartiger Transport eines viskosen Mediums in einer Gasströmung erlaubt einen weitestgehend lageunabhängigen Transport auch kleinster Mengen des viskosen Mediums, insbesondere weitestgehend unbeeinflusst von Schwerkrafteinflüssen.

Dieses Transportprinzip nutzende Vorrichtungen der eingangs genannten Art sind insbesondere aus der EP 0 902 868 B1 sowie aus dem in deren Beschreibungseinleitung beschriebenen Stand der Technik gemäß der US 5,253,733 und EP 0 010 269 A1 bekannt. Verwendet werden derartige Aufteilvorrichtungen beispielsweise im Zusammenhang mit Schmiersystemen von Schienenfahrzeugen oder Walzanlagen wobei mittels der Aufteilvorrichtungen Schmierstoff auf verschiedene zu schmierende Reibstellen entsprechender Maschinenteile gegeben wird.

Die bisher bekannten Vorrichtungen zum Aufteilen eines in einer Gasströmung transportierten viskosen Mediums weisen im praktischen Einsatz zahlreiche Nachteile auf und lassen insbesondere eine zuverlässige und gleichmäßige Aufteilung des viskosen Mediums nicht zu, so dass die Schmierung schlecht steuer- und dosierbar ist. Darüber hinaus sind die bisher bekannten Vorrichtungen fertigungstechnisch aufwendig und weisen keine bzw. nur geringe Möglichkeiten zur Anpassung an Anforderungen verschiedener zu schmierender Maschinenteile, insbesondere an deren unterschiedliche Schmierbedürfnisse, auf.

In Anbetracht dieses Standes der Technik liegt der vorliegenden Erfindung die **Aufgabe** zugrunde, eine Vorrichtung zum Aufteilen eines in einer Gasströmung transportierten viskosen Mediums, insbesondere eines Schmiermittels wie Öl, der eingangs genannten Art bereitzustellen, welche unter Meidung der beschriebenen Nachteile ein zuverlässiges, gleichmäßiges und gezielt dosierbares Aufteilen des in der Gasströmung transportierten viskosen Mediums ermöglicht und insbesondere individuell an Anforderungen verschiedener zu schmierender Maschinenteile anpassbar ist.

Zur technischen **Lösung** dieser Aufgabe wird eine Vorrichtung zum Aufteilen eines in einer Gasströmung transportierten viskosen Mediums, insbesondere eines Schmiermittels wie Öl, mit einem Gehäuse mit einem an einer Stirnseite des Gehäuses vorhandenen Zuströmanschluss und mit wenigstens zwei an der gegenüberliegenden Stirnseite des Gehäuses vorhandenen Abströmanschlüssen vorgeschlagen, die gekennzeichnet ist durch einen sich in Strömungsrichtung an den Zuströmanschluss anschließenden Verdichter, einen sich an den Verdichter anschließenden Expansionsraum und einen an den Expansionsraum angrenzenden, mit den Abströmanschlüssen verbundenen Verteiler, der eine sich an den Expansionsraum anschließende Wirbelkammer, einen an die Wirbelkammer angrenzenden Beruhigungsraum und wenigstens zwei den Beruhigungsraum mit einem Abströmanschluss verbindende Zuteilbohrungen aufweist.

Das über den Zuströmanschluss in einer Gasströmung transportierte, wendelförmig und schlierenartig ankommende viskose Medium wird vor dem Verdichter gestaut. Durch den düsenartig ausgebildeten Verdichter wird die Gasströmung beschleunigt. Die beschleunigte Gasströmung reißt dabei vor dem Verdichter gestautes viskoses Medium in Tropfen mit. Die mitgerissenen Tropfen des viskosen Mediums werden mit der Gasströmung in den Expansionsraum beschleunigt und in Tropfen mit einem kleineren Durchmesser zerlegt. Die zerlegten. Tropfen des viskosen Mediums werden anschließend mit der Gasströmung in die Wirbelkammer transportiert. In der Wirbelkammer werden die Tropfen des viskosen Mediums durch die Turbulenz der Gasströmung mit dem Gas gleichmäßig vermischt, so dass ein homogenes Medium-Gas-Gemisch gegeben ist. Das homogenisierte Medium-Gas-Gemisch gelangt dann in den Beruhigungsraum. Dabei setzen sich die Tropfen des viskosen Mediums gleichmäßig an den Wandungen des Beruhigungsraums ab. Die Gasströmung triebt dann den sich durch die an den Wandungen abgesetzten Tropfen des viskosen Mediums gebildeten Film über die Zuteilbohrung zu den Abströmanschlüssen. Dabei wurde in praktischen Versuchen die Erkenntnis erlangt, dass aufgrund der zunächst gegebenen Homogenisierung des viskosen Mediums in der Wirbelkammer und der sich daran anschließenden Beruhigung im Beruhigungsraum eine zuverlässige und gleichmäßigere Aufteilung des viskosen Mediums, und damit eine verbesserte Dosierbarkeit und höhere Effektivität der Schmierung erzielbar sind.

In einer vorteilhaften Ausgestaltung der Erfindung weist der Verteiler Zuteilbohrungen mit unterschiedlich großen Durchmessern auf. Dadurch kann die Aufteilung des in der Gasströmung transportierten viskosen Mediums entsprechend unterschiedlich dosiert und gesteuert erfolgen.

Eine weitere Ausgestaltung der Erfindung sieht vor, dass die Wirbelkammer ein zylindrischer sich in Strömungsrichtung kegelförmig verengender Raum mit einem zylinderförmigen Raumbereich und einem sich in Strömungsrichtung daran anschließenden kegelförmigen Raumbereich ist. Die Kegelfläche des kegelförmigen Raumbereichs der Wirbelkammer ist gegenüber deren Längsachse vorteilhafterweise um einen Winkel ≤ 45°, vorzugsweise um einen Winkel von 45°, angewinkelt ist. In einer weiteren vorteilhaften Ausgestaltung der Erfindung ist der Beruhigungsraum ein sich an den zylindrischen Raumbereich der Wirbelkammer anschließender, den kegelförmigen Raumbereich der Wirbelkammer zumindest teilweise umgebender ringspaltförmiger Raum, vorzugsweise mit einer Spaltbreite von etwa 0,2 mm bis etwa 0,6 mm.

Eine weitere Ausgestaltung der Erfindung sieht vor, dass sich die Zuteilbohrung radial zur Längsachse des Verteilers erstreckt. Gemäß einer weiteren bevorzugten Ausgestaltung der Erfindung ist die Zuteilbohrung zwischen dem sich an den zylindrischen Raumbereich der Wirbelkammer anschließenden Ringspaltanfang des Beruhigungsraums und dem Ringspaltende des Beruhigungsraums mit dem Beruhigungsraum verbunden, vorzugsweise derart, dass die Länge vom Ringspaltanfang bis zur Zuteilbohrung sich zu der Länge von der Zuteilbohrung bis zum Ringspaltende verhält wie 1/3 zu 2/3.

In einer konkreten Ausgestaltung der Erfindung sind die Abströmanschlüsse im Verteiler ausgebildete Bohrungen, die sich in Richtung der Längsachse des Verteilers erstrecken. Dabei sind in einer weiteren Ausgestaltung der Erfindung eine Bohrung eines Abströmanschlusses und eine Zuteilbohrung einander durchdringend ausgebildet.

Vorteilhafterweise ist der Verteiler in das rohrförmige Gehäuse einschraubbar. Als separates Bauteil kann der Verteiler so an unterschiedliche zu schmierende Maschinenteile und insbesondere an deren Strömungscharakteristika und Strömungs- bzw. Schmierbedürfnisse angepasst werden. Darüber hinaus ist der Verteiler so einfach austauschbar.

In einer vorteilhaften Ausgestaltung der Erfindung weist der Verdichter einen in den Expansionsraum hineinragenden, sich vorzugsweise in Strömungsrichtung kegelstumpfförmig verjüngenden Ansatz auf, der eine Abreisskante für in der Gasströmung zu transportierendes viskoses Medium bereitstellt.

In einer weiter bevorzugten Ausgestaltung der Erfindung weist der Verdichter eine sich in Strömungsrichtung an den Zuströmanschluss anschließende erste Bohrung und eine sich an diese in Strömungsrichtung anschließende zweite Bohrung auf, wobei der Durchmesser der ersten Bohrung größer ist als der Durchmesser der zweiten Bohrung. Vorteilhafterweise beträgt das Verhältnis des Durchmessers der kleinen Bohrung zur Länge der kleinen Bohrung etwa 1:7 und das Verhältnis des Durchmessers der großen Bohrung zur Länge der großen Bohrung etwa 1:12. Weiter beträgt das Verhältnis des Durchmessers der kleinen Bohrung zu dem Durchmesser der großen Bohrung vorteilhafterweise etwa zwischen 1:1,5 und 1:2,5. In einer vorteilhaften-Ausgestaltung der Erfindung ist der Verdichter in das rohrförmige Gehäuse einschraubbar. Als separates Bauteil kann der Verdichter so an unterschiedliche zu schmierende Maschinenteile und deren Strömungscharakteristika angepasst werden. Darüber hinaus ist der Verdichter so einfach austauschbar.

Der Expansionsraum erweitert sich in einer weiteren Ausgestaltung der Erfindung in Strömungsrichtung kegelstumpfförmig, wobei die Kegelstumpffläche des Expansionsraums gegenüber dessen Längsachse vorteilhafterweise um einen Winkel < 15°, vorzugsweise um einen Winkel ≤ 10°, angewinkelt ist. In einer bevorzugten Ausgestaltung der Erfindung ist der Expansionsraum als Bohrung im rohrförmigen Gehäuse ausgebildet. Eine weitere vorteilhafte Ausgestaltung sieht vor, dass der Expansionsraum als separates Bauteil in das rohrförmige Gehäuse einschraubbar ist. Als separates Bauteil kann der Expansionsraum so an unterschiedliche zu schmierende Maschinenteile und deren Stömungscharakteristika angepasst werden. Darüber hinaus ist der Expansionsraum so einfach austauschbar.

In einer besonders bevorzugten Ausgestaltung der Erfindung ist an jeden Abströmanschluss eine in einem Ringkörper endende Rohrleitung angeschlossen, die über den Ringkörper mit einer Bohrung in einem mit dem viskosen Medium zu versorgenden Maschinenteil verbunden ist. In einer konkreten Ausgestaltung der Erfindung weist der Ringkörper auf seiner Außenseite eine Nut auf, die über eine Bohrung mit der im Ringkörper endenden Rohrleitung verbunden und an die Bohrung in einem mit dem viskosen Medium zu versorgenden Maschinenteil angrenzt. Der Ringkörper ist in einer weiteren vorteilhaften Ausgestaltung der Erfindung zur Durchführung wenigstens einer weiteren Rohrleitung eines Abströmanschlusses ausgebildet. Vorteilhafterweise sind die Rohrleitungen in den Ringkörpern befestigt, vorzugsweise durch Kleben.

In einer weiteren vorteilhaften Ausgestaltung der Erfindung ist die Vorrichtung in einer für die Vorrichtung vorgesehene Bohrung seitens eines mit dem viskosen Medium zu versorgenden Maschinenteils einschraubbar. So ist neben einer vereinfachten Montage bzw. Demontage der Vorrichtung auch ein einfache Nachrüstung derselben seitens eines mit dem viskosen Medium zu versorgenden Maschinenteils gegeben.

Weitere Einzelheiten, Merkmale und Vorteile der Erfindung werden nachfolgend anhand der in den Figuren dargestellten Ausführungsbeispiele näher erläutert. Dabei zeigen:
- Fig. 1: in einer schematischen Längsschnittdarstellung ein Ausführungsbeispiel einer erfindungsgemäßen Aufteilvorrichtung;
- Fig. 2: einen vergrößerten Detailausschnitt der Vorrichtung gemäß Fig. 1 und
- Fig. 3: in einer schematischen Längsschnittdarstellung ein weiteres Ausführungsbeispiel einer erfindungsgemäßen Aufteilvorrichtung.

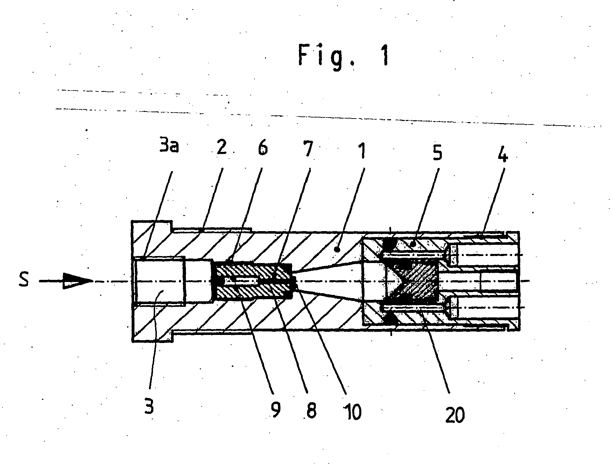

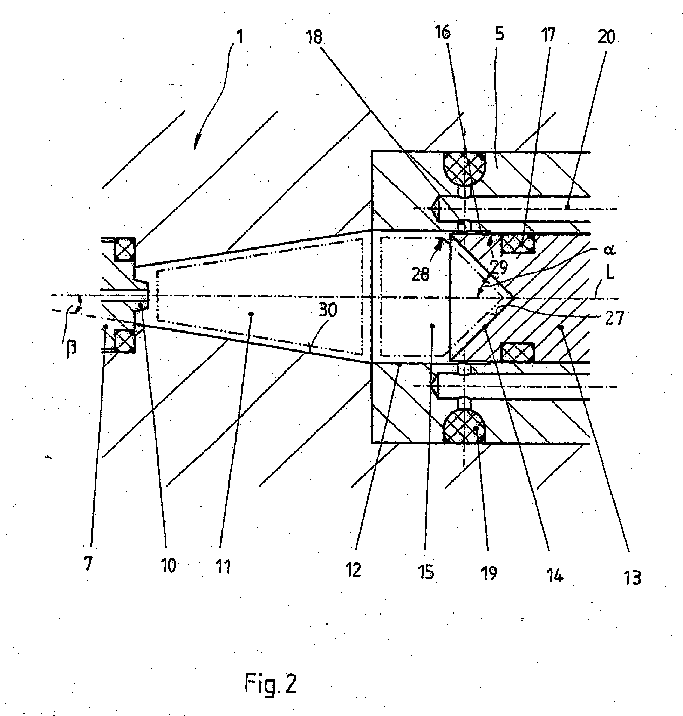

Die in Fig. 1 und Fig. 2 dargestellte Vorrichtung ist zum Aufteilen eines in einer Luftströmung transportierten Öls ausgebildet und weist ein rohrförmiges Gehäuse 1 auf. Das rohrförmige Gehäuse 1 weist an der in Fig. 1 links gelegenen Stirnseite einen Zuströmanschluss 3 für ein mit der Vorrichtung aufzuteilendes Öl-Luft-Gemisch auf. Der Zuströmanschluss 3 ist vorliegend durch eine mit einem Innengewinde 3a versehene Bohrung im rohrförmigen Gehäuse 1 ausgebildet. In das Innengewinde 3a des Zuströmanschlusses 3 ist eine hier nicht dargestellte Rohrleitung einschraubbar, über welche das aufzuteilende Öl-Luft-Gemisch zuströmt.

Die den Zuströmanschluss 3 ausbildende Bohrung weist beabstandet von dem Innengewinde 3a des Zuströmanschlusses 3 ein weiteres Innengewinde 6 auf, in welches ein sich in Strömungsrichtung S an den Zuströmanschluss 3 anschließemder Verdichter 7 für den zuströmenden Öl-Luft-Strom eingeschraubt ist. Der düsenartige Verdichter 7 weist eine sich in Strömungsrichtung S an den Zuströmanschluss 3 anschließende erste Bohrung 9 und eine sich an diese in Strömungsrichtung S anschließende zweite Bohrung 8 auf. Der Durchmesser der ersten Bohrung 9 ist größer als der Durchmesser der zweiten Bohrung 8. Vorliegend beträgt das Verhältnis des Durchmessers der kleinen Bohrung 8 zur Länge der kleinen Bohrung 8 etwa 1:7 und das Verhältnis des Durchmessers der großen Bohrung 9 zur Länge der großen Bohrung 9 etwa 1:12. Weiter liegt das Verhältnis des Durchmessers der kleinen Bohrung 8 zu dem Durchmesser der großen Bohrung 9 etwa zwischen 1:1,5 und 1:2,5. Wie anhand des vergrößerten Detailausschnitts gemäß Fig. 2 zu erkennen ist, weist der Verdichter 7 einen sich in Strömungsrichtung S kegelstumpfförmig verjüngenden Ansatz 10 auf, welcher in den sich in Strömungsrichtung S an den Verdichter 7 anschließenden Expansionsraum 11 hineinragt. Dabei bildet der in den Expansionsraum (11) hineinragende Ansatz 10 des Verdichters 7 eine Abrißkante für dort verdichtetes Öl-Luft-Gemisch, wie nachfolgend noch näher erläutert.

Der sich in Strömungsrichtung S an den Verdichter 7 anschließende Expansionsraum 11 erweitert sich in Strömungsrichtung S kegelstumpfförmig und ist vorliegend als Bohrung im rohrförmigen Gehäuse 1 ausgebildet. Die Kegelstumpffläche 30 des Expansionsraums 11 ist gegenüber dessen Längsachse L vorliegend um einen Winkel β von etwa 10° angewinkelt.

An den Expansionsraum 11 grenzt ein Verteiler 5 an, welcher in einer an der in Fig. 1 rechts gelegenen Stirnseite des rohrförmigen Gehäuses 1 ausgebildeten und mit einem Innengewinde 4 versehenen Bohrung eingeschraubt ist. Im Verteiler 5 sind sich in Richtung der Längsachse L des Verteilers 5 zur in Fig. 1 rechts gelegenen Stirnseite des rohrförmigen Gehäuses 1 hin erstreckende Bohrungen ausgebildet, welche Abströmanschlüsse 20 für das mit der Vorrichtung aufgeteilte Öl bilden.

Der Verteiler 5 weist eine sich an den Expansionsraum 11 anschließende Wirbelkammer 15 auf, welche durch einen zylindrischen und einen sich in Strömungsrichtung anschließenden, S-kegelförmig verengenden Raum gebildet ist. Der zylinderförmige Raumbereich weist das Bezugszeichen 12 und der kegelförmige Raumbereich das Bezugszeichen 14 auf. Der die Wirbelkammer 15 ausbildende sich in Strömungsrichtung S kegelförmig verengende Raum ist vorliegend durch eine zylindrische Bohrung in dem Verteiler 5 ausgebildet, in welche ein Zylinder 13 mit einer kegelförmigen Senkung eingeschraubt ist. Dabei bildet die kegelförmige Senkung den kegelförmigen Raumbereich 14 und der von dem Zylinder 13 nicht besetzte verbleibende Teil der zylindrischen Bohrung den zylinderförmigen Raumbereich 12 der Wirbelkammer 15. Die Kegelfläche 27 des kegelförmigen Raumbereichs 14 der Wirbelkammer 15 ist vorliegend gegenüber deren Längsachse L um einen Winkel α von 45° angewinkelt.

Ferner weist der Verteiler 5 einen an die Wirbelkammer 15 angrenzenden Beruhigungsraum 16 auf, welcher, wie anhand des vergrößerten Detailausschnitts gemäß Fig. 2 zu erkennen ist, durch einen sich an den zylindrischen Raumbereich 12 der Wirbelkammer 15 anschließenden, den kegelförmigen Raumbereich 14 der Wirbelkammer 15 zumindest teilweise umgebenden ringspaltförmigen Raum ausgebildet ist. Der den Beruhigungsraum 16 bildende ringspaltförmige Raum weist eine Spaltbreite von etwa 0,2 mm bis etwa 0,6 mm auf. Der Beruhigungsraum 16 wird durch einen seitens des Zylinders 13 vorgesehenen Dichtungsring 17 abgedichtet.

Von dem Beruhigungsraum 16 gehen vorliegend über den Umfang gleichmäßig verteilt Zuteilbohrungen 18 ab, die jeweils mit einem Abströmanschluss 20 verbunden sind. Die Zuteilbohrungen 18 erstrecken sich radial zur Längsachse L des Verteilers 5. und sind zwischen dem sich an den zylindrischen Raumbereich 12 der Wirbelkammer 15 anschließenden Ringspaltanfang 28 des Beruhigungsraums 16 und dem Ringspaltende 29 des Beruhigungsraums 16 mit dem Beruhigungsraum 16 verbunden. Dabei verhält sich vorliegend die Länge vom Ringspaltanfang 28 bis zur Zuteilbohrung 18 zu der Länge von der Zuteilbohrung 18 bis zum Ringspaltende 29 verhält wie 1/3 zu 2/3. Durch einen Dichtungsring 19 werden die Zuteilbohrungen 18 gegenüber dem rohrförmigen Gehäuse 1 abgedichtet und verschlossen. Wie anhand von Fig. 2 zu erkennen ist, sind die Bohrungen der Abströmanschlüsse 20 die mit diesen jeweils verbundenen Zuteilbohrungen 18 einander durchdringend ausgebildet.

Neben Zuteilbohrungen 18 mit gleich großen Durchmessern kann der Verteiler 5 auch Zuteilbohrungen 18 mit unterschiedlich großen Durchmessern aufweisen, insbesondere um verschiedene Dosiermengen für die einzelnen zu schmierenden Reibstellen bereitstellen zu können.

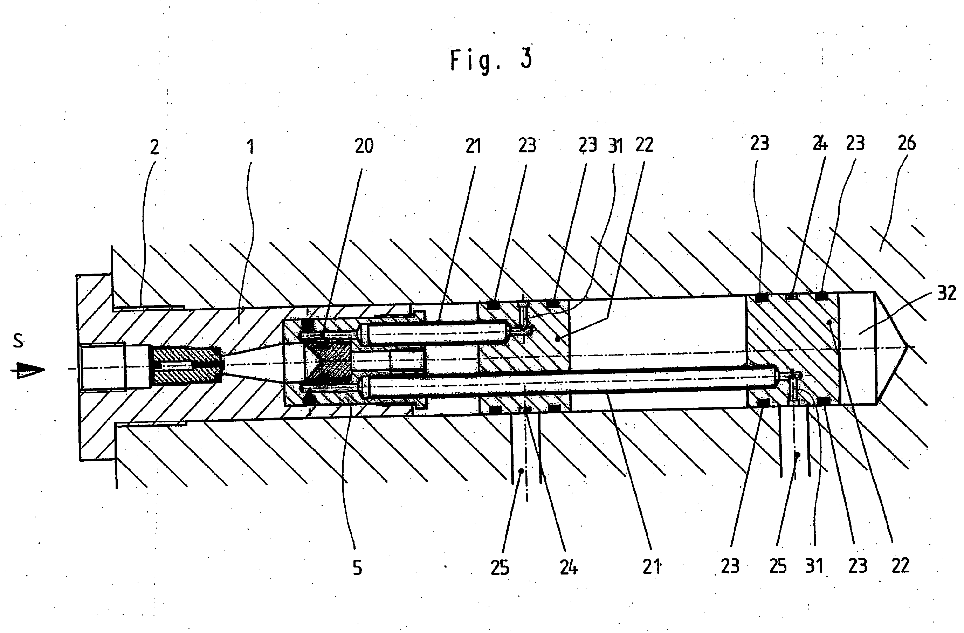

Bei dem in Fig. 3 dargestellten Ausführungsbeispiel einer erfindungsgemäßen Aufteilvorrichtung ist an jeden Abströmanschluss 20 einer erfindungsgemäßen Aufteilvorrichtung gemäß Fig. 1 und Fig. 2 eine jeweils in einem vorliegend metallischen Ringkörper 22 endende Rohrleitung 21 aus Stahl angeschlossen ist. Die Rohrleitungen 21 sind dabei jeweils über den jeweiligen Ringkörper 22 mit einer Bohrung 25 in einem mit dem Öl zu versorgenden Maschinenteil 26 verbunden. Die Ringkörper 22 weisen auf ihrer Außenseite jeweils eine Nut 24 auf, die über eine Bohrung 31 mit der im jeweiligen Ringkörper 22 endenden Rohrleitung 21 verbunden ist. Die Nut 24 grenzt an die Bohrung 25 in einem mit Öl zu versorgenden Maschinenteil 26 an. Die vorliegend metallischen Ringkörper 22 weisen jeweils zwei beabstandet von der Nut auf der Außenfläche der Ringkörper angeordnete Dichtungsringe 23 auf, die die Bohrung 31 gegenüber der Nut 24 abdichten. Der in Fig. 3 links dargestellte Ringkörper 22 ist zur Durchführung der zum in Fig. 3 rechts dargestellten Ringkörper 22 führenden Rohrleitung 21 ausgebildet. Dabei bilden die in den Ringkörpern 22 und den Abströmanschlüssen 20 des Verteiler 5 vorliegend durch Kleben befestigten Rohrleitungen 21 zusammen mit den Ringkörpern 22 eine in der Bohrung 32 des Maschinenteils 26 angeordnete Lanze. Die erfindungsgemäße Aufteilvorrichtung ist mittels eines seitens des rohrförmigen Gehäuses 1 vorgesehenen Außengewindes 2 in die mit einem korrespondierenden Innengewinde versehene Bohrung 32 des Maschinenteils 26 einschraubbar.

Nachfolgend wird die Funktionsweise der erfindungsgemäßen Aufteilvorrichtung anhand des Ausführungsbeispiels gemäß Fig. 3 näher erläutert:

Der Aufteilvorrichtung wird über den Zuströmanschluss 3 ein Öl-Luft-Strom zugeführt. Das wendelförmig und schlierenartig über den Zuströmanschluss 3 ankommende Öl wird vor dem düsenartigen Verdichter 7 gestaut. In dem düsenartigen Verdichter 7 wird der Luftstrom beschleunigt. Dabei reißt der beschleunigte Luftstrom von dem in Strömungsrichtung S vor dem Verdichter 7 gestauten Öl tröpfchenweise Öl mit. Die mitgerissenen Öltröpfchen werden mit dem Luftstrom in den Expansionsraum 11 getrieben und in Mikrotröpfchen, d.h. Tröpfchen mit einem kleineren Durchmesser, zerlegt. Die Mikroöltröpfchen gelangen anschließend als Öl-Luft-Gemisch in die Wirbelkammer 15. In der Wirbelkammer 15 werden die Mikroöltröpfchen durch die Turbulenz der Luftströmung mit der Luft gleichmäßig vermischt, so dass ein homogenes Öl-Luft-Gemisch gegeben ist. Das homogenisierte Öl-Luft-Gemisch tritt dann in den Beruhigungsraum 16 ein, wobei sich die Öltröpfchen gleichmäßig an den Wandungen des Beruhigungsraums 16 absetzen. Die Luftströmung treibt dann den sich durch die an den Wandungen abgesetzten Öltröpfchen gebildeten Ölfilm über die Zuteilbohrungen 18 in die Abströmanschlüsse 20 und von dort über die Rohrleitungen 21 der mit den metallischen Ringkörpern 22 und den Rohrleitungen 21 aus Stahl gebildeten Lanze zu den zu schmierenden Reibstellen des Maschinenteils 26.

Die in den Figuren dargestellten Ausführungsbeispiele dienen lediglich der Erläuterung der Erfindung und sind für diese nicht beschränkend.

### Bezugszeichenliste

- 1: Gehäuse
- 2: Außengewinde
- 3: Zuströmanschluss
- 3a: Innengewinde
- 4: Innengewinde
- 5: Verteiler
- 6: Innengewinde
- 7: Verdichter
- 8: Bohrung (klein)
- 9: Bohrung (groß)
- 10: Ansatz (Verdichter 7)
- 11: Expansionsraum
- 12: Raumbereich (zylindrisch)
- 13: Zylinder
- 14: Raumbereich (kegelförmig)
- 15: Wirbelkammer
- 16: Beruhigungsraum (ringspaltförmig)
- 17: Dichtung (Zylinder 13)
- 18: Zuteilbohrung
- 19: Dichtung (Zuteilbohrung 18)
- 20: Abströmanschluss
- 21: Rohrleitung
- 22: Ringkörper
- 23: Dichtung (Ringkörper 22)
- 24: Nut (Ringkörper 22)
- 25: Bohrung (Maschinenteil 26)
- 26: Maschinenteil
- 27: Kegelfläche
- 28: Ringspaltanfang (Beruhigungsrauni 16)
- 29: Ringspaltende (Beruhigungsraum 16)
- 30: Kegelstumpffläche
- 31: Bohrung (Ringkörper 22)
- 32: Bohrung (Maschinenteil 26)
- S: Strömungsrichtung
- L: Längsachse
- α: Winkel
- β: Winkel

## Patentansprüche

1. Vorrichtung zum Aufteilen eines in einer Gasströmung transportierten viskosen Mediums, insbesondere eines Schmiermittels wie Öl, mit einem Gehäuse (1) mit einem an einer Stirnseite des Gehäuses (1) vorhandenen Zuströmanschluss (3) und mit wenigstens zwei an der gegenüberliegenden Stirnseite des Gehäuses (1) vorhandenen Abströmanschlüssen (20), **gekennzeichnet durch**
einen sich in Strömungsrichtung (S) an den Zuströmanschluss (3) anschließenden Verdichter (7), einen sich an den Verdichter (7) anschließenden Expansionsraum (11) und einen an den Expansionsraum (11) angrenzenden, mit den Abströmanschlüssen (20) verbundenen Verteiler (5), der eine sich an den Expansionsraum (11) anschließende Wirbelkammer (15), einen an die Wirbelkammer (15) angrenzenden Beruhigungsraum (16) und wenigstens zwei den Beruhigungsraum (16) mit einem Abströmanschluss (20) verbindende Zuteilbohrungen (18) aufweist.

2. Vorrichtung nach Anspruch 1, **dadurch gekennzeichnet, dass** der Verteiler (5) Zuteilbohrungen (18) mit unterschiedlich großen Durchmessern aufweist.

3. Vorrichtung nach Anspruch 2, **dadurch gekennzeichnet, dass** die Wirbelkammer (15) ein zylindrischer sich in Strömungsrichtung (S) kegelförmig verengender Raum mit einem zylinderförmigen Raumbereich (12) und einem kegelförmigen Raumbereich (14) ist.

4. Vorrichtung nach Anspruch 3, **dadurch gekennzeichnet, dass** die Kegelfläche (27) des kegelförmigen Raumbereichs (14) der Wirbelkammer (15) gegenüber deren Längsachse (L) um einen Winkel (α) ≤ 45°, vorzugsweise um einen Winkel (α) von 45°, angewinkelt ist.

5. Vorrichtung nach einem der Ansprüche 1 bis 4, **dadurch gekennzeichnet, dass** der Beruhigungsraum (16) ein sich an den zylindrischen Raumbereich (12) der Wirbelkammer (15) anschließender, den kegelförmigen Raumbereich (14) der Wirbelkammer (15) zumindest teilweise umgebender ringspaltförmiger Raum ist, vorzugsweise mit einer Spaltbreite von etwa 0,2 mm bis etwa 0,6 mm.

6. Vorrichtung nach einem der Ansprüche 1 bis 5, **dadurch gekennzeichnet, dass** die Zuteilbohrung (18) sich radial zur Längsachse (L) des Verteilers (5) erstreckt.

7. Vorrichtung nach Anspruch 5 oder Anspruch 6, **dadurch gekennzeichnet, dass** die Zuteilbohrung (18) zwischen dem sich an den zylindrischen Raumbereich (12) der Wirbelkammer (15) anschließenden Ringspaltanfang (28) des Beruhigungsraums (16) und dem Ringspaltende (29) des Beruhigungsraums (16) mit dem Beruhigungsraum (16) verbunden ist, vorzugsweise derart, dass die Länge vom Ringspaltanfang (28) bis zur Zuteilbohrung (18) sich zu der Länge von der Zuteilbohrung (18) bis zum Ringspaltende (29) verhält wie 1/3 zu 2/3.

8. Vorrichtung nach einem der Ansprüche 1 bis 7, **dadurch gekennzeichnet, dass** die Abströmanschlüsse (20) im Verteiler (5) ausgebildete Bohrungen sind die sich in Richtung der Längsachse (L) des Verteilers (5) erstrecken.

9. Vorrichtung nach Anspruch 8, **dadurch gekennzeichnet, dass** eine Bohrung eines Abströmanschlusses (20) und eine Zuteilbohrung (18) einander durchdringend ausgebildet sind.

10. Vorrichtung nach einem der Ansprüche 1 bis 9, **dadurch gekennzeichnet, dass** der Verteiler (5) in das rohrförmige Gehäuse (1) einschraubbar ist.

11. Vorrichtung nach einem der Ansprüche 1 bis 10, **dadurch gekennzeichnet, dass** der Verdichter (7) einen in den Expansionsraum (11) hineinragenden, sich vorzugsweise in Strömungsrichtung (S) kegelstumpfförmig verjüngenden Ansatz (10) aufweist.

12. Vorrichtung nach einem der Ansprüche 1 bis 11, **dadurch gekennzeichnet**, das der Verdichter (7) eine sich in Strömungsrichtung (S) an den Zuströmanschluss (3) anschließende erste Bohrung (9) und eine sich an diese in Strömungsrichtung (S) anschließende zweite Bohrung (8) aufweist, wobei der Durchmesser der ersten Bohrung (9) größer ist als der Durchmesser der zweiten Bohrung (8).

13. Vorrichtung nach Anspruch 12, **dadurch gekennzeichnet, dass** das Verhältnis des Durchmessers der kleinen Bohrung (8) zur Länge der kleinen Bohrung (8) etwa 1:7 und das Verhältnis des Durchmessers der großen Bohrung (9) zur Länge der großen Bohrung (9) etwa 1:12 beträgt.

14. Vorrichtung nach Anspruch 12 oder Anspruch 13, **dadurch gekennzeichnet, dass** das Verhältnis des Durchmessers der kleinen Bohrung (8) zu dem Durchmesser der großen Bohrung (9) etwa zwischen 1:1,5 und 1:2,5 liegt.

15. Vorrichtung nach einem der Ansprüche 1 bis 14, **dadurch gekennzeichnet, dass** der Verdichter (7) in das rohrförmige Gehäuse (1) einschraubbar ist.

16. Vorrichtung nach einem der Ansprüche 1 bis 15, **dadurch gekennzeichnet, dass** der Expansionsraum (11) sich in Strömungsrichtung (S) kegelstumpfförmig erweitert.

17. Vorrichtung nach Anspruch 16, **dadurch gekennzeichnet, dass** die Kegelstumpffläche (30) des Expansionsraums (11) gegenüber dessen Längsachse (L) um einen Winkel (β) < 15°, vorzugsweise um einen Winkel (β) ≤ 10°, angewinkelt ist.

18. Vorrichtung nach einem der Ansprüche 1 bis 17, **dadurch gekennzeichnet, dass** der Expansionsraum (11) als Bohrung im rohrförmigen Gehäuse (1) ausgebildet ist.

19. Vorrichtung nach einem der Ansprüche 1 bis 17, **dadurch gekennzeichnet, dass** der Expansionsraum (11) in das rohrförmige Gehäuse (1) einschraubbar ist.

20. Vorrichtung nach einem der Ansprüche 1 bis 19, **dadurch gekennzeichnet, dass** an jeden Abströmanschluss (20) eine in einem Ringkörper (22) endende Rohrleitung (21) angeschlossen ist, die über den Ringkörper (22) mit einer Bohrung (25) in einem mit dem viskosen Medium zu versorgenden Maschinenteil (26) verbunden ist.

21. Vorrichtung nach Anspruch 20, **dadurch gekennzeichnet, dass** der Ringkörper (22) auf seiner Außenseite eine Nut (24) aufweist, die über eine Bohrung (31) mit der im Ringkörper (22) endenden Rohrleitung (21) verbunden und an die Bohrung (25) in einem mit dem viskosen Medium zu versorgenden Maschinenteil (26) angrenzt.

22. Vorrichtung nach Anspruch 20 oder Anspruch 21, **dadurch gekennzeichnet, dass** eine der Zahl der Versorgungsböhrungen (25) entsprechende Zahl von in Strömungsrichtung hintereinander angeordneten Ringkörpern (22) vorgesehen ist, die jeweils zur Durchführung der notwendigen Rohrleitungen (21) zu dem mit dem viskosen Medium zu versorgenden Maschinenteil ausgebildet sind.

23. Vorrichtung nach einem der Ansprüche 20 bis 22, **dadurch gekennzeichnet, dass** die Rohrleitungen (21) in den Ringkörpern (22) befestigt sind, vorzugsweise durch Kleben.

24. Vorrichtung nach einem der Ansprüche 1 bis 23, **dadurch gekennzeichnet, dass** diese in ein mit dem viskosen Medium zu versorgendes Maschinenteil (26) einschraubbar ist.

## Claims

1. A device for dividing a viscous medium transported in a gas flow, in particular a lubricant such as oil, comprising a housing (1) comprising an inlet connection (3) existing on a front side of the housing (1) and comprising at least two outlet connections (20) existing on the opposite front side of the housing (1),
**characterized by**
a compressor (7) linked with the inlet connection (3) in flow direction (S), an expansion chamber (11) linked with the compressor (7) and a distributor (5), which adjoins the expansion chamber (11) and which is connected to the outlet connections (20) and which encompasses a whirl chamber (15) linked with the expansion chamber (11), a slow-down chamber (16) adjoining the whirl chamber (15) and at least two metering bores (18), which connect the slow-down chamber (16) to an outlet connection (20).

2. The device according to claim 1, **characterized in that** the distributor (5) encompasses metering bores (18) comprising diameters of different sizes.

3. The device according to claim 2, **characterized in that** the whirl chamber (15) is a cylindrical space, which narrows in flow direction (S) in a conical manner, comprising a cylindrical area (12) and a conical area (14) .

4. The device according to claim 3, **characterized in that** the tapered surface (27) of the conical area (14) of the whirl chamber (15) relative to the longitudinal axis (L) thereof is angled at an angle (a) ≤ 45°, preferably at an angle (a) of 45°.

5. The device according to one of claims 1 to 4, **characterized in that** the slow-down chamber (16) is an annular space, which is linked with the cylindrical area (12) of the whirl chamber (15) and which partially surrounds the conical area (14) of the whirl chamber (15), preferably comprising a gap width of approximately 0.2 mm to approximately 0.6 mm.

6. The device according to one of claims 1 to 5, **characterized in that** the metering bore (18) extends radially to the longitudinal axis (L) of the distributor (5).

7. The device according to claim 5 or claim 6, **characterized in that** the metering bore (18) between the beginning of the annular gap (28) of the slow-down chamber (16), which is linked with the cylindrical area (12) of the whirl chamber (15) and the end of the annular gap (29) of the slow-down chamber (16) is connected to the slow-down chamber (16), preferably such that the length from the beginning of the annular gap (28) to the metering bore (18) has a ratio to the length of the metering bore (18) to the end of the annular gap (29) of 1/3 to 2/3.

8. The device according to one of claims 1 to 7, **characterized in that** the outlet connections (20) are bores, which are embodied in the distributor (5), and which extend in the direction of the longitudinal axis (L) of the distributor (5).

9. The device according to claim 8, **characterized in that** a bore of an outlet connection (20) and a metering bore (18) are embodied so as to permeate one another.

10. The device according to one of claims 1 to 9, **characterized in that** the distributor (5) can be screwed into the tubular housing (1).

11. The device according to one of claims 1 to 10, **characterized in that** the compressor (7) encompasses an attachment (10), which projects into the expansion chamber (11) and which preferably tapers in a truncated cone-shaped manner in flow direction (S).

12. The device according to one of claims 1 to 11, **characterized in that** the compressor (7) encompasses a first bore (9), which links with the inlet connection (3) in flow direction (S) and a second bore (8), which links therewith in flow direction (S), wherein the diameter of the first bore (9) is greater than the diameter of the second bore (8).

13. The device according to claim 12, **characterized in that** the ratio of the diameter of the small bore (8) to the length of the small bore (8) is approximately 1:7 and the ratio of the diameter of the large bore (9) to the length of the large bore (9) is approximately 1:12.

14. The device according to claim 12 or claim 13, **characterized in that** the ratio of the diameter of the small bore (8) to the diameter of the large bore (9) lies approximately between 1:1.5 and 1:2.5.

15. The device according to one of claims 1 to 14, **characterized in that** the compressor (7) can be screwed into the tubular housing (1).

16. The device according to one of claims 1 to 15, **characterized in that** the expansion chamber (11) widens in flow direction (S) in a truncated cone-shaped manner.

17. The device according to claim 16, **characterized in that** the truncated cone-shaped surface (30) of the expansion chamber (11) relative to the longitudinal axis (L) thereof is angled at an angle (β) < 15°, preferably at an angle (β) ≤ 10°.

18. The device according to one of claims 1 to 17, **characterized in that** the expansion chamber (11) is embodied as bore in the tubular housing (1).

19. The device according to one of claims 1 to 17, **characterized in that** the expansion chamber (11) can be screwed into the tubular housing (1).

20. The device according to one of claims 1 to 19, **characterized in that** a piping (21), which ends in a ring body (22), is connected to each outlet connection (20), with said piping (21) being connected to a bore (25) via the ring body (22) in a machine part (26), which is to be supplied with the viscous medium.

21. The device according to claim 20, **characterized in that** the ring body (22) encompasses a groove (24) on its outer side, with said groove (24) being connected via a bore (31) to the piping (21), which ends in the ring body (22) and adjoining the bore (25) in a machine part (26), which is to be supplied with the viscous medium.

22. The device according to claim 20 or claim 21, **characterized in that** provision is made for a number of ring bodies (22) arranged downstream from one another in flow direction, with said number corresponding to the number of the supply bores (25), said ring bodies (22) being in each case embodied for leading the necessary pipings (21) through to the machine part, which is to be supplied with the viscous material.

23. The device according to one of claims 20 to 22, **characterized in that** the pipings (21) are attached in the ring bodies (22), preferably by means of adhesion.

24. The device according to one of claims 1 to 23, **characterized in that** said device can be screwed into a machine part (26), which is to be supplied with the viscous medium.

## Revendications

1. Dispositif pour répartir un fluide visqueux transporté dans un flux gazeux, notamment un agent lubrifiant tel que de l'huile, avec un boîtier (1), avec un raccord d'admission (3) présent sur le face frontale du boîtier (1) et avec au moins deux raccords d'évacuation (20) présents sur la face frontale opposée du boîtier (1),
**caractérisé par**
un compresseur (7) se raccordant en direction d'écoulement (S) sur le raccord d'admission (3), une chambre d'expansion (11) se raccordant sur le compresseur (7) et un distributeur (5) adjacent à la chambre d'expansion (11) relié aux raccords d'évacuation (20), qui comporte une chambre de turbulence (15) se raccordant sur la chambre d'expansion (11), une chambre de stabilisation (16) adjacente à la chambre de turbulence et au moins deux perçages de dosage (18) reliant la chambre de stabilisation (16) avec un raccord d'évacuation (20).

2. Dispositif selon la revendication 1, **caractérisé en ce que** le distributeur (5) comporte des perçages de dosage (18) avec des diamètres de différentes dimensions.

3. Dispositif selon la revendication 2, **caractérisé en ce que** la chambre de turbulence (15) est un espace cylindrique, se rétrécissant sous forme conique en direction d'écoulement (S), avec une partie d'espace cylindrique (12) et une partie d'espace conique (14).

4. Dispositif selon la revendication 3, **caractérisé en ce que** la surface conique (27) de la partie d'espace de forme conique (14) de la chambre de turbulence (15) est relevée par rapport à l'axe longitudinal (L) de cette dernière d'un angle (α) = 45°, de préférence d'un angle (α) de 45°.

5. Dispositif selon l'une quelconque des revendications 1 à 4, **caractérisé en ce que** la chambre de stabilisation (16) est un espace en forme d'interstice annulaire se raccordant sur la partie d'espace cylindrique (12) de la chambre de turbulence (15), entourant au moins partiellement la partie d'espace conique (14) de la chambre de turbulence (15) de préférence d'une largeur d'interstice de 0,2 mm à environ 0,6 mm.

6. Dispositif selon l'une quelconque des revendications 1 à 5, **caractérisé en ce que** le perçage de dosage (18) s'étend en direction radiale par rapport à l'axe longitudinal (L) du distributeur (5).

7. Dispositif selon la revendication 5 ou la revendication 6, **caractérisé en ce qu'**entre le début de l'interstice annulaire (28) de la chambre de stabilisation (16) se raccordant sur la partie d'espace cylindrique (12) de la chambre de turbulence (15) et la fin de l'interstice annulaire (29) de la chambre de stabilisation (16), le perçage de dosage (18) est relié à la chambre de stabilisation (16) de préférence de sorte que la longueur du début de l'interstice annulaire (28) jusqu'au perçage de dosage (18) se comporte par rapport à la longueur du perçage de dosage (18) jusqu'à la fin de l'interstice annulaire (29) selon un rapport de 1/3 à 2/3.

8. Dispositif selon l'une quelconque des revendications 1 à 7, **caractérisé en ce que** les raccords d'évacuation (20) sont des perçages réalisés dans le distributeur (5) qui s'étendent en direction de l'axe longitudinal (L) du distributeur (5).

9. Dispositif selon la revendication 8, **caractérisé en ce qu'**un perçage du raccord d'évacuation (20) et un perçage de dosage (18) sont réalisés de sorte à se traverser.

10. Dispositif selon l'une quelconque des revendications 1 à 9, **caractérisé en ce que** le distributeur (5) peut se visser dans le boîtier (1) tubulaire.

11. Dispositif selon l'une quelconque des revendications 1 à 10, **caractérisé en ce que** le compresseur (7) comporte un embout (10) saillant dans la chambre d'expansion (11), se rétrécissant de préférence sous forme tronconique dans la direction d'écoulement (S).

12. Dispositif selon l'une quelconque des revendications 1 à 11, **caractérisé en ce que** le compresseur (7) comporte un premier perçage (9) se raccordant sur le raccord d'admission (3), dans la direction d'écoulement (S) et un deuxième perçage (8) se raccordant sur ce dernier dans la direction d'écoulement (S), le diamètre du premier perçage (9) étant supérieur au diamètre du deuxième perçage (8).

13. Dispositif selon la revendication 12, **caractérisé en ce que** le rapport du diamètre du petit perçage (8) à la longueur du petit perçage (8) est d'environ 1:7 et **en ce que** le rapport du diamètre du grand perçage (9) à la longueur du grand perçage (9) est d'environ 1:12.

14. Dispositif selon la revendication 12 ou la revendication 13, **caractérisé en ce que** le rapport du diamètre du petit perçage (8) au diamètre du grand perçage (9) est compris environ entre 1:1,5 et 1:2,5.

15. Dispositif selon l'une quelconque des revendications 1 à 14, **caractérisé en ce que** le compresseur (7) peut se visser dans le boîtier (1) tubulaire.

16. Dispositif selon l'une quelconque des revendications 1 à 15, **caractérisé en ce que** la chambre d'expansion (11) s'élargit sous forme tronconique dans la direction d'écoulement (S).

17. Dispositif selon la revendication 16, **caractérisé en ce que** la surface tronconique (30) de la chambre d'expansion (11) par rapport à l'axe longitudinal (L) de ce dernier est relevée d'un angle (β) < 15°, de préférence d'un angle (β) = 10°.

18. Dispositif selon l'une quelconque des revendications 1 à 17, **caractérisé en ce que** la chambre d'expansion (11) est réalisée sous la forme d'un perçage dans le boîtier (1) tubulaire.

19. Dispositif selon l'une quelconque des revendications 1 à 17, **caractérisé en ce que** la chambre d'expansion (11) peut se visser dans le boîtier (1) tubulaire.

20. Dispositif selon l'une quelconque des revendications 1 à 19, **caractérisé en ce qu'**à chaque raccord d'évacuation (20) est raccordée une canalisation (21) se terminant dans un corps annulaire (22), qui par l'intermédiaire du corps annulaire (22) est reliée à un perçage (25) dans un élément de machine (26) devant être alimenté en fluide visqueux.

21. Dispositif selon la revendication 20, **caractérisé en ce que** le corps annulaire (22) comporte sur sa face extérieure une rainure (24), qui par l'intermédiaire d'un perçage (31) est relié à la canalisation (21) qui se termine dans le corps annulaire (22) et est adjacente au perçage (25) dans un élément de machine (26) devant être alimenté en fluide visqueux.

22. Dispositif selon la revendication 20 ou selon la revendication 21, **caractérisé en ce qu'**il est prévu un nombre correspondant au nombre des perçages d'alimentation (25) de corps annulaires (22) disposés les uns derrière les autres en direction d'écoulement, qui sont conçus chacun pour le passage des canalisations (21) nécessaires vers l'élément de machine devant être alimenté en fluide visqueux.

23. Dispositif selon l'une quelconque des revendications 20 à 22, **caractérisé en ce que** les canalisations (21) sont fixées dans les corps annulaires (22), de préférence par collage.

24. Dispositif selon l'une quelconque des revendications. 1 à 23, **caractérisé en ce que** ce dernier peut se visser dans un élément de machine (26) devant être alimenté en fluide visqueux.
